# EUROPÄISCHE PATENTSCHRIFT

(11) **EP 3 814 727 B1**
(45) Veröffentlichungstag und Bekanntmachung des Hinweises auf die Patenterteilung: **17.01.2024**
(21) Anmeldenummer: 19726667.9
(22) Anmeldetag: 23.05.2019
(51) Int. Cl.: G01F 23/00, G01F 25/20, G01F 23/263, G01F 23/296, G01F 23/80

(54) **PARAMETRIERUNG EINES FELDGERÄTS**
PARAMETERIZATION OF A FIELD DEVICE
PARAMÉTRAGE D'UN APPAREIL DE TERRAIN

(30) Priorität: 26.06.2018 DE 102018115368
(43) Veröffentlichungstag der Anmeldung: 05.05.2021
(73) Patentinhaber: Endress+Hauser SE+Co. KG, 79689 Maulburg (DE)
(72) Erfinder: ARNOLD, Michèle, 8908 Hedingen (CH); BECHTEL, Gerd, 79585 Steinen (DE); FERRARO, Franco, 79650 Schopfheim (DE)
(74) Vertreter: Koslowski, Christine Adelheid
(86) Internationale Anmeldenummer: PCT/EP2019/063408
(87) Internationale Veröffentlichungsnummer: WO 2020/001874

(56) Entgegenhaltungen:
- DE-A1- 10 057 974
- GB-A- 2 552 685
- US-A- 5 895 848
- US-A1- 2011 226 054

## Beschreibung

Die vorliegende Erfindung betrifft ein Verfahren zur Parametrierung einer Vorrichtung zur Bestimmung und/oder Überwachung eines vorgebbaren Füllstands.

Feldgeräte in Form von Grenzstandschaltern in der Prozess- und/oder Automatisierungstechnik können auf unterschiedlichsten Messprinzipien, welche zur Bestimmung und/oder Überwachung eines Füllstands dienen, beruhen. Diese Messprinzipien sind an sich aus dem Stand der Technik bekannt und werden daher an dieser Stelle nicht im Detail erörtert.

Beispiele für Grenzstandschalter zur Bestimmung und/oder Überwachung eines vorgebbaren Füllstands sind beispielsweise vibronische Sensoren mit zumindest einer mechanisch schwingfähigen Einheit oder auch kapazitive und/oder konduktive Sensoren. Entsprechende Feldgeräte werden von der Anmelderin in großer Vielfalt hergestellt und im Falle von vibronischen Füllstandsmessgeräten beispielsweise unter der Bezeichnung LIQUIPHANT und/oder SOLIPHANT, und im Falle von kapazitiven und/oder konduktiven Messgeräten beispielsweise unter der Bezeichnung LIQUIPOINT vertrieben.

Im Falle eines vibronischen Grenzstandschalters wird beispielsweise unterschieden, ob die schwingfähige Einheit von dem jeweiligen Medium bedeckt ist oder frei schwingt. Diese beiden Zustände, der Freizustand und der Bedecktzustand, können dabei beispielsweise anhand unterschiedlicher Resonanzfrequenzen, also anhand einer Frequenzverschiebung, unterschieden werden.

Im Falle eines konduktiven Grenzstandschalters wird dagegen erkannt, ob über ein leitfähiges Medium ein elektrischer Kontakt zwischen einer Sondenelektrode und der Wandung eines leitfähigen Behälters oder einer zweiten Elektrode besteht. Bei einem auf dem kapazitiven Messprinzip beruhenden Messgerät wird dagegen der Füllstand aus der Kapazität des von einer Sondenelektrode und der Wandung des Behälters oder einer zweiten Elektrode gebildeten Kondensators ermittelt. Je nach Leitfähigkeit des Mediums bildet entweder das Medium selbst oder eine Sondenisolierung das Dielektrikum des Kondensators.

Unabhängig vom jeweils verwendeten Messprinzip werden im Falle eine Grenzstandschalters, bzw. einer Vorrichtung zur Bestimmung und/oder Überwachung eines vorgebbaren Füllstandes, zwei Schaltzustände unterschieden. In einem ersten Schaltzustand ist die Sensoreinheit frei von Medium, während sie in einem zweiten Schaltzustand zumindest teilweise von dem Medium bedeckt ist. Der erste Schaltzustand und der zweite Schaltzustand entsprechen dabei jeweils einem bestimmten Wert oder Wertebereich für das jeweils von der Sensoreinheit empfangene Empfangssignal bzw. für verschiedene für die jeweilige Signalverarbeitung verwendete aus dem Empfangssignal abgeleitete Größen. Bei diesen Größen kann es sich beispielsweise um eine Frequenz, Amplitude oder Phase des Empfangssignals handeln.

Zwischen den beiden Schaltzuständen wird zumindest ein Schaltpunkt definiert. Erreicht das Empfangssignal oder die jeweils betrachtete daraus abgeleitete Größe einen vorgebbaren, dem Schaltpunkt entsprechenden, Wert, so schaltet die Vorrichtung zwischen den beiden Schaltzuständen hin- und her. Der jeweilige Schaltpunkt entspricht dabei einer vorgebbaren Bedeckung der Sensoreinheit mit dem Medium. Dabei kann es sich um eine vollständige Bedeckung oder auch um eine vorgebbare Teilbedeckung der Sensoreinheit mit dem jeweiligen Medium handeln, wobei die Sensoreinheit üblicherweise an einer vorgebbaren Position, insbesondere einer vorgebbaren Höhe, an einer Behälterwand eines das Medium enthaltenden Behälters angeordnet ist.

Grenzstandschalter werden häufig in sicherheitskritischen Anwendungen eingesetzt. Ein zuverlässiges Schalten zwischen den beiden Schaltzuständen der jeweiligen Vorrichtung ist deshalb von großer Bedeutung.

In diesem Zusammenhang ist aus der EP0614519B1 ein vibronischer Grenzstandschalter bekannt geworden, bei welchem der Schaltpunkt, im dort beschriebenen Fall eine Schaltfrequenz, in Abhängigkeit einer Resonanzfrequenz der schwingfähigen Einheit eingestellt wird. Die genaue Lage der Resonanzfrequenz der schwingfähigen Einheit variiert von Sensor zu Sensor. Um ein zuverlässiges Schalten des Sensors zu gewährleisten, muss der jeweilige Schaltpunkt in Abhängigkeit der Resonanzfrequenz gewählt werden.

Aus der EP01336083B1 ist wiederum ein vibronischer Grenzstandschalter bekannt geworden, bei welchem Störgrößen bei der Bestimmung des Schaltpunktes berücksichtigt werden. Auf diese Weise werden Fehlfunktionen der Messvorrichtung, die dadurch zustande kommen, dass Temperatur- und/oder Druckabweichungen das Erreichen des Schaltpunktes lediglich vortäuschen, ausgeschlossen. Die jeweils betrachtete Störgröße wird entweder direkt gemessen, oder es werden Kennlinien erstellt, die den Einfluss der Störgröße auf die Frequenz der schwingfähigen Einheit wiedergeben. In jedem Fall muss aber die jeweilige Störgröße kontinuierlich zur Verfügung gestellt werden, um ihren Einfluss auf das Messverhalten des vibronischen Sensors zu kompensieren, was einen erhöhten konstruktiven und messtechnischen Aufwand darstellt.

In der Veröffentlichungsschrift US 2011/0226054 A1 ist ein vibronischer Grenzstandschalter offenbart, dessen Schaltpunkt bzw. Schaltfrequenz als Einfluss-Intervall eine etwaige Restfeuchte bzw. Restbedeckung durch das flüssige Füllgut berücksichtigt.

Auch die Veröffentlichungsschrift DE 100 57 974 A1 beschreibt einen vibronischen Grenzstandschalter. In diesem Fall wird die gemessene Schwingfrequenz der mechanisch schwingfähigen Einheit in Bezug auf die dominanten Störgrößen - Druck, Temperatur und Viskosität - nachträglich rechnerisch korrigiert.

Ausgehend vom Stand der Technik liegt der vorliegenden Erfindung die Aufgabe zugrunde, eine Möglichkeit zur Parametrierung eines Grenzstandschalters bereitzustellen, die auf einfache Art und Weise durchgeführt werden kann.

Diese Aufgabe wird gelöst durch ein Verfahren zur Parametrierung einer Vorrichtung zur Bestimmung und/oder Überwachung eines vorgebbaren Füllstands, umfassend zumindest eine Sensoreinheit und eine Elektronik. Das Verfahren beinhaltet die folgenden Verfahrensschritte:
Bestimmen zumindest eines Einfluss-Intervalls für ein von der Sensoreinheit empfangenes Empfangssignal in Abhängigkeit von zumindest einem Umgebungsparameter, wobei sich das Einfluss-Intervall über einen vorgegebenen Wertebereich für den jeweiligen Umgebungsparameter erstreckt und eine Variation des Empfangssignals in Abhängigkeit des Umgebungsparameters beschreibt,
Bestimmen eines ersten Wertes für das Empfangssignal oder eine aus dem Empfangssignal abgeleiteten Größe entsprechend einem ersten Schaltzustand, bei welchem Wert sich die Sensoreinheit in einem ersten Zustand befindet,
Bestimmen eines zweiten Wertes für das Empfangssignal oder eine aus dem Empfangssignal abgeleiteten Größe entsprechend einem zweiten Schaltzustand, bei welchem Wert sich die Sensoreinheit in einem zweiten Zustand befindet, und Bestimmen zumindest eines dritten Wertes für das Empfangssignal oder eine aus dem Empfangssignal abgeleiteten Größe entsprechend einem ersten Schaltpunkt anhand des ersten und/oder zweiten Schaltzustands und unter Berücksichtigung des zumindest einen Einfluss-Intervalls.

Erfindungsgemäß wird zumindest ein Einfluss-Intervall ermittelt, welches die Abhängigkeit des Empfangssignals oder einer daraus abgeleiteten Größe von zumindest einem Umgebungsparameter berücksichtigt. Das Einfluss-Intervall kann dabei, beispielsweise vor Inbetriebnahme des jeweiligen Messgeräts, für jedes Messgerät einzeln ermittelt werden. Ebenfalls ist es aber denkbar, anhand einer Vielzahl von Messgeräten zumindest ein Einfluss-Intervall zu ermitteln, welches dann für alle gattungsgemäßen Messgeräte herangezogen wird. Anhand des zumindest einen Einfluss-Intervalls wird ein erster Wertebereich für das Empfangssignal oder die aus dem Empfangssignal abgeleitete Größe ermittelt wird, welcher erste Wertebereich den ersten Wert des Empfangssignals oder der aus dem Empfangssignal abgeleiteten Größe enthält, wobei der erste Wertebereich dem ersten Schaltzustand entspricht. Der erste Schaltpunkt wird derart gewählt, dass der dritte Wert für das Empfangssignal oder die aus dem Empfangssignal abgeleitete Größe außerhalb des ersten Wertebereichs entsprechend dem ersten Schaltzustand liegt.

Parameter eines Feldgeräts sind im Zusammenhang der vorliegenden Erfindung beispielsweise die beiden Schaltzustände und der zumindest eine Schaltpunkt. Bei den aus dem Empfangssignal abgeleiteten Größen kann es sich beispielsweise um eine Amplitude, Frequenz oder Phase des Empfangssignals handeln. Welche Größen aus dem jeweils direkt von der Sensoreinheit empfangenen Signals ableitbar sind oder abgeleitet werden, hängt dabei unter anderem vom verwendeten Messprinzip und dem jeweiligen Empfangssignal, welches beispielsweise ein Strom oder eine Spannung sein kann, ab.

Im Rahmen der vorliegenden Erfindung sind zahlreiche Möglichkeiten zur Bestimmung des Einfluss-Intervalls denkbar. Einerseits kann der Einfluss von zumindest zwei unterschiedlichen Umgebungsparametern auf das Empfangssignal oder die daraus abgeleitete Größe einzeln und/oder gemeinsam untersucht werden und dann ein einziges Einfluss-Intervall in Abhängigkeit der zumindest zwei Umgebungsparameter bestimmt werden. Dies kann beispielsweise von Vorteil sein, wenn die Abhängigkeit des Empfangssignals oder der daraus abgeleiteten Größe für die zumindest zwei Umgebungsparameter ähnlich ist, beispielsweise auf ähnlichen oder gleichartigen funktionalen Zusammenhängen beruht.

Ebenso ist es aber denkbar, für verschiedene Werte des Empfangssignals oder der daraus abgeleiteten Größe unterschiedliche Einfluss-Intervalle zu bestimmen und zu berücksichtigen. Dies kann wiederum dann von Vorteil werden, wenn eine Differenz zwischen dem ersten und zweiten Wert des Empfangssignals oder der daraus abgeleiteten Größe besonders groß ist.

Vorteilhaft muss der jeweils betrachtete Umgebungsparameters erfindungsgemäß nicht fortlaufend bestimmt oder ermittelt werden. Vielmehr kann einmalig zumindest ein Einfluss-Intervall bestimmt werden und dann für den fortlaufenden Betrieb herangezogen werden. Der zumindest eine Schaltpunkt wird dabei optimal an die beiden Schaltzustände und an das zumindest eine Einfluss-Intervall angepasst werden. Die Bestimmung des zumindest einen Schaltpunkts kann dabei zumindest teilweise automatisiert erfolgen. Im Vergleich zum Stand der Technik bietet die erfindungsgemäße Lösung sowohl in konstruktiver als auch in messtechnischer Hinsicht eine beträchtliche Vereinfachung dar. Es sind keine zusätzlichen Messungen oder rechnerische Bestimmungen eines Wertes des jeweiligen Umgebungsparameters im fortlaufenden Messbetrieb notwendig.

Eine Ausgestaltung des Verfahrens beinhaltet, dass es sich bei dem Umgebungsparameter um die Temperatur den Druck, die Feuchte, die Dichte oder die Viskosität handelt. Der Umgebungsparameter kann sich einerseits auf das die Sensoreinheit zumindest teilweise und/oder zeitweise umgebende Medium oder um die die Messvorrichtung außerhalb des Mediums umgebende Umgebung beziehen.

Es ist im Rahmen des erfindungsgemäßen Verfahrens von Vorteil, wenn das Einfluss-Intervall jeweils symmetrisch um den ersten und zweiten Schaltzustand bzw. den ersten und zweiten Wert für das Empfangssignal oder die daraus abgeleitete Größe herum gelegt wird.

Das Einfluss-Intervall kann sich über einen vorgebbaren Wertebereich für den jeweiligen Umgebungsparameter, welcher beispielsweise dem jeweiligen Einsatzbereich für den Umgebungsparameter bei Betrieb der Vorrichtung entspricht, erstrecken. Beispielsweise kann für die jeweilige Vorrichtung ein bestimmter Temperatur-, Druck-, Feuchte-, Dichte- oder Viskositätsbereich vorgegeben werden, innerhalb welchen Bereichs die Vorrichtung verwendet werden kann. Für diesen Wertebereich des jeweiligen Umgebungsparameters wird dann die Abhängigkeit des Empfangssignals der Vorrichtung oder der aus dem Empfangssignal abgeleiteten Größe ermittelt und anhand des Wertebereichs für das Empfangssignal oder die daraus abgeleiteten Größe das Einfluss-Intervall bestimmt. Das Einfluss-Intervall beschreibt damit die Variation des Empfangssignals in Abhängigkeit des Umgebungsparameters.

Ist der Wertebereich für den jeweiligen Umgebungsparameter bekannt, so können der erste und zweite Schaltzustand beispielsweise bei einem Mittelwert des Wertebereichs des Umgebungsparameters bestimmt werden. Auf diese Weise ist das Einfluss-Intervall automatisch symmetrisch um den ersten und zweiten Schaltzustand herum angeordnet. Das Einfluss-Intervall wird also jeweils symmetrisch um den ersten und zweiten Schaltzustand herum gelegt, indem der erste und zweiter Schaltzustand bei einem Mittelwert des Wertebereichs des Umgebungsparameters bestimmt werden.

In einer besonders bevorzugten Ausgestaltung wird zumindest ein vierter Wert für das Empfangssignal oder eine aus dem Empfangssignal abgeleitete Größe entsprechend einem zweiten Schaltpunkt anhand des ersten und/oder zweiten Schaltzustands und unter Berücksichtigung des zumindest einen Einfluss-Intervalls bestimmt. Durch die Bestimmung von zwei Schaltpunkten kann eine sogenannte Schaltpunkt-Hysterese berücksichtigt werden. Unter der Schaltpunkt-Hysterese wird dabei eine Differenz aus Hin- und Rückschaltpunkt verstanden. Die Wechsel vom ersten in den zweiten Schaltzustand bzw. vom zweiten in den ersten Schaltzustand erfolgen entsprechend bei zwei unterschiedlichen Schaltpunkten.

Hierbei ist es von Vorteil, wenn der erste und/oder zweite Schaltpunkt derart bestimmt wird/werden, dass der dritte und/oder vierte Wert für das Empfangssignal oder die aus dem Empfangssignal abgeleitete Größe zwischen dem ersten und zweiten Wert für das Empfangssignal oder die aus dem Empfangssignal abgeleitete Größe entsprechend dem ersten und zweiten Schaltzustand liegt/liegen.

Ferner ist es von Vorteil, wenn der erste und zweite Schaltpunkt einen vorgebaren Schaltabstand zueinander aufweisen, welcher durch einen Betrag einer Differenz zwischen dem dritten und vierten Wert für das Empfangssignal oder die aus dem Empfangssignal abgeleiteten Größe gegeben ist.

Bezüglich des Schaltabstands ist es wiederum von Vorteil, wenn der vorgebbare Schaltabstand unter Berücksichtigung des ersten und/oder zweiten Schaltzustands und des Einfluss-Intervalls maximiert wird.

Es ist ferner von Vorteil, wenn der vorgebbare Schaltabstand derart gewählt wird, dass der Schaltabstand größer als das Einfluss-Intervall ist.

Durch passende Wahl des vorgebbaren Schaltabstands kann berücksichtigt werden, dass auch für solche Werte des Empfangssignals oder der daraus abgeleiteten Größe der Einfluss des zumindest einen Umgebungsparameters berücksichtigt wird, welche zwischen dem ersten und zweiten Schaltzustand entsprechenden ersten und zweiten Wert des Empfangssignals oder der daraus abgeleiteten Größe liegen. Entsprechende Werte des Empfangssignals oder der daraus abgeleiteten Größe entsprechen unterschiedlichen Teilbedeckungen der Sensoreinheit.

Eine weitere besonders bevorzugte Ausgestaltung beinhaltet, dass anhand des zumindest einen Einfluss-Intervalls ein zweiter Wertebereich für das Empfangssignal oder die aus dem Empfangssignal abgeleitete Größe ermittelt wird, welcher zweite Wertebereich den zweiten Wert des Empfangssignals oder der aus dem Empfangssignal abgeleiteten Größe enthält, wobei der zweite Wertebereich dem zweiten Schaltzustand entspricht. Anstatt jeweils einen einzelnen Wert für das Empfangssignal oder die daraus abgeleitete Größe für den Schaltzustand zu bestimmen, wird also in Abhängigkeit des zumindest einen Umgebungsparameters jeweils ein Wertebereich für den jeweiligen Schaltzustand ermittelt.

In dieser Hinsicht ist es von Vorteil, wenn der zweite Schaltpunkt derart gewählt wird, dass der vierte Wert für das Empfangssignal oder die aus dem Empfangssignal abgeleitete Größe außerhalb des zweiten Wertebereichs entsprechend dem zweiten Schaltzustand liegt. Der erste und zweite Schaltpunkt weisen also jeweils einen vorgebbaren Abstand größer null zum ersten bzw. zweiten Wertebereich für das Empfangssignals oder die daraus abgeleitete Größe auf. Beispielsweise sei der dritte Wert für das Empfangssignal oder die daraus abgeleitete Größe kleiner als der vierte Wert für das Empfangssignal oder die daraus abgeleitete Größe.

Entsprechend liegt der erste Schaltpunkt bei einem geringeren Wert als der zweite Schaltpunkt. Dann würde der dritte Wert für das Empfangssignal oder die daraus abgeleitete Größe so gewählt, dass dieser Wert größer ist als ein Maximalwert des ersten Wertebereichs des ersten Schaltzustands. Ebenso würde der vierte Wert für das Empfangssignal oder die daraus abgeleitete Größe so gewählt, dass dieser Wert kleiner ist als ein Minimalwert des zweiten Wertebereichs des zweiten Schaltzustands.

Eine weitere bevorzugte Ausgestaltung beinhaltet, dass der erste und zweite Schaltpunkt derart gewählt werden, dass der dritte und vierte Wert für das Empfangssignal oder die aus dem Empfangssignal abgeleitete Größe außerhalb des ersten und zweiten Wertebereichs entsprechend dem ersten und zweiten Schaltzustand liegen.

Alternativ, oder falls dies nicht möglich sein sollte, beinhaltet noch eine bevorzugte Ausgestaltung, dass, insbesondere falls ein Betrag einer Differenz zwischen einem Maximalwert des ersten Wertebereichs entsprechend dem ersten Schaltzustand und einem Minimalwert des zweiten Wertebereichs entsprechend dem zweiten Schaltzustand kleiner ist als das Einfluss-Intervall, der erste oder zweite Schaltpunkt derart gewählt wird, dass der dritte oder vierte Wert für das Empfangssignal oder die aus dem Empfangssignal abgeleitete Größe außerhalb des ersten oder zweiten Wertebereichs entsprechend dem ersten oder zweiten Schaltpunkt liegt.

Es ist mit Hinblick auf das erfindungsgemäße Verfahren von Vorteil, wenn die Sensoreinheit im ersten Schaltzustand frei von Medium ist.

Es ist ebenfalls von Vorteil, wenn die Sensoreinheit im zweiten Schaltzustand zumindest teilweise mit Medium bedeckt ist.

Schließlich ist es von Vorteil, wenn der erste und/oder zweite Schaltpunkt jeweils einem vorgebbaren Bedeckungsgrad der Sensoreinheit entsprechen.

Die der Erfindung zugrundeliegende Aufgabe wird ebenfalls gelöst durch eine Vorrichtung, welche dazu ausgestaltet ist, ein erfindungsgemäßes Verfahren nach zumindest einer der im Zusammenhang mit dem erfindungsgemäßen Verfahren beschriebenen Ausgestaltungen auszuführen.

Die Erfindung wird anhand der nachfolgenden Figuren näher erläutert.
- Fig. 1: zeigt ein vibronisches Feldgerät gemäß Stand der Technik;
- Fig. 2: zeigt ein nach dem kapazitiven und/oder konduktiven Betriebsmodus arbeitendes Feldgerät gemäß Stand der Technik;
- Fig. 3: zeigt eine schematische Darstellung zur Veranschaulichung der Bestimmung der beiden Schaltzustände und des Einfluss-Intervalls (a) im Falle, dass ein einziger Schaltpunkt bestimmt wird, und (b) im Falle, dass zwei Schaltpunkte bestimmt werden, und
- Fig. 4: zeigt verschiedene Fälle hinsichtlich der Lage der Schaltzustände und Schaltpunkte unter Berücksichtigung des Einfluss-Intervalls.

In den Figuren sind jeweils gleiche Elemente jeweils mit dem gleichen Bezugszeichen versehen.

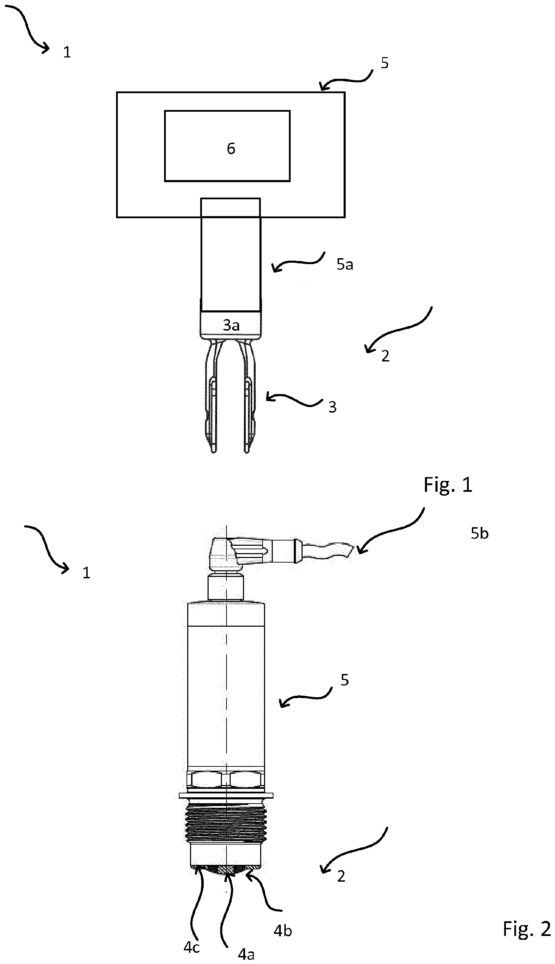

Die vorliegende Erfindung ist für alle Arten von Feldgeräten 1 in Form von Grenzstandschaltern einsetzbar. Der Einfachheit halber orientiert sich die nachfolgende Beschreibung jedoch an den Beispielen eines vibronischen Füllstandsmessgeräts (Fig. 1) und eines nach dem kapazitiven und/oder konduktiven Betriebsmodus arbeitendes Feldgerät (Fig. 2), wie sie schematisch in den Figuren Fig. 1 und Fig. 2 dargestellt sind.

In Fig. 1 ist eine ein vibronisches Füllstandsmessgerät 1 mit einer Sensoreinheit 2 mit einer schwingfähigen Einheit 3 gezeigt, welches zur Erfassung eines vorgegebenen Füllstands, oder zur Bestimmung der Dichte und/oder Viskosität geeignet ist. Entsprechende Feldgeräte werden von der Anmelderin unter den Bezeichnungen LIQUIPHANT oder SOLIPHANT hergestellt und vertrieben. Die jeweils zugrundeliegenden Messprinzipien sind aus einer Vielzahl von Veröffentlichungen bekannt. Die Sensoreinheit 2 des Feldgerätes 1 weist eine mechanisch schwingfähige Einheit 3 in Form einer Schwinggabel auf. Die schwingfähige Einheit wird von einer Antriebs-/Empfangseinheit 3a mittels eines elektrischen Anregesignals zu mechanischen Schwingungen, insbesondere mit der Resonanzfrequenz der Schwinggabel 3, angeregt. Außerdem empfängt die Antriebs-/Empfangseinheit 3a die mechanischen Schwingungen der schwingfähigen Einheit 3 und wandelt sie in ein elektrisches Empfangssignalsignal um. Bei der Antriebseinheit- /Empfangseinheit 3a handelt es sich vorzugsweise um ein oder mehrere piezoelektrische Elemente. Das Erreichen eines vorgegebenen Füllstands kann dann beispielsweise anhand einer Änderung der Frequenz der Schwingungen der mechanisch schwingfähigen Einheit 3 detektiert werden, welche aus dem von der schwingfähigen Einheit 3 empfangenen Empfangssignal ableitbar ist. Die Sensoreinheit 2 ist wiederum mittels des Halsrohres 5a mit einer Elektronikeinheit 6 verbunden, welche in einem Feldgerät-Gehäuse 5 angeordnet ist. Es handelt sich somit für das gezeigte Beispiel um ein Feldgerät 1 in sogenannter Kompaktbauweise, für welche die Elektronikeinheit 6 und die Sensoreinheit 2 gemeinsam angeordnet sind.

Ein nach dem kapazitiven und/oder konduktiven Messverfahren arbeitender Grenzstandschalter ist in Fig. 2 gezeigt. Das kapazitive Messprinzip und das konduktive Messprinzip sind ebenfalls an sich aus dem Stand der Technik bekannt. Entsprechende Feldgeräte werden von der Anmelderin beispielsweise unter dem Begriff LIQUIPOINT hergestellt und vertrieben. Das Feldgerät 1 aus Fig. 2 umfasst eine Sensoreinheit 2, welche, wenn das Feldgerät 1 in einen Behälter eingebracht wird, im Wesentlichen frontbündig mit dem Behälter abschließt.

Die Sensoreinheit 2 ist im Wesentlichen koaxial aufgebaut und eine Messelektrode 4a, eine Guardelektrode 4b und eine Masseelektrode 4c. Das Gehäuse 5 des Feldgeräts 1 weist ferner in der gezeigten Ausführung noch eine Buchse für einen Anschlussstecker 5b auf. Bei dem Grenzstandschalter 1 nach Fig. 2 ist somit die Elektronik 6 separat von der Sensoreinheit 2 angeordnet.

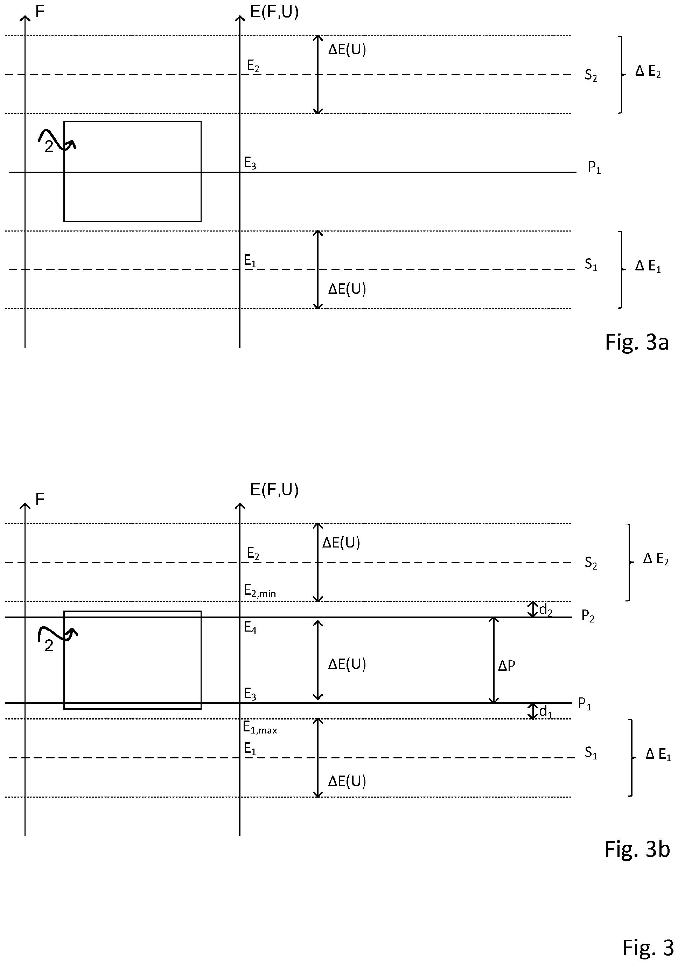

Fig.3 illustriert nun die erfindungsgemäße Bestimmung des ersten S₁ und zweiten Schaltzustands S₂ für einen Grenzstandschalter sowie die Bestimmung eines ersten Schaltpunktes P₁ (Fig. 3a) bzw. eines ersten P₁ und zweiten Schaltpunkts P₂ (Fig. 3b) unter Berücksichtigung eines Einfluss-Intervalls ΔE.

Zuerst wird ein Einfluss-Intervall ΔE(U) für ein von der Sensoreinheit 2 empfangenes Empfangssignal E(F,U) in Abhängigkeit von zumindest einem Umgebungsparameter U ermittelt. Das Empfangssignal E ist dabei eine Funktion des Füllstands F und des Umgebungsparameters U. Erfindungsgemäß soll der Einfluss des Umgebungsparameters anhand des Einfluss-Intervalls ΔE(U) bzw. durch das Einfluss-Intervall ΔE(U) reduziert oder eliminiert werden. Das Einfluss-Intervall kann einmalig für eine bestimmte Gattung von Grenzstandschalter 1 oder für jeden individuellen Grenzstandschalter 1 bestimmt werden, beispielsweise durch eine Bestimmung des Empfangssignals E(F,U) in Abhängigkeit eines vorgebbaren Wertebereichs für den Umgebungsparameter U, innerhalb dessen das Messgerät 1 im fortlaufenden Betrieb eingesetzt wird.

Außerdem wird ein erster Wert E₁ für das Empfangssignal E oder eine aus dem Empfangssignal abgeleitete Größe entsprechend einem ersten Schaltzustand S₁, bei welchem Wert sich die Sensoreinheit 2 in einem ersten Zustand befindet, bestimmt. Ebenso wird ein zweiter Wert E₂ für das Empfangssignal E oder eine aus dem Empfangssignal abgeleitete Größe entsprechend einem zweiten Schaltzustand S₂, bei welchem Wert sich die Sensoreinheit 2 in einem zweiten Zustand befindet, bestimmt. Vorliegend ist die Sensoreinheit 2 im ersten Schaltzustand S₁ frei von Medium, d.h. der aktuelle Füllstand F ist derart, dass die Sensoreinheit 2 frei von Medium M ist. Im zweiten Schaltzustand S₂ ist die Sensoreinheit 2 dagegen vollständig mit dem Medium M bedeckt. Für die in Fig. 3a gezeigte, sowie für alle folgenden Ausgestaltungen liegt das Einfluss-Intervall ΔE(U) jeweils symmetrisch um den ersten S1 und zweiten Schaltpunkt S2 herum. Eine derartige Anordnung des Einfluss-Intervalls ΔE(U) relativ zu den jeweiligen Schaltpunkten S₁ und S₂ ist jedoch im Rahmen der vorliegenden Erfindung keineswegs zwingend notwendig.

Es ist ferner auch denkbar, für den ersten S₁ und/oder zweiten Schaltzustand S₂ jeweils diesen entsprechende Wertebereiche ΔE₁ und/oder ΔE₂ für das Empfangssignal E oder die daraus abgeleitete Größe zu bestimmen, die den ersten E₁ und zweiten Wert E₂ für das Empfangssignal E oder die daraus abgeleitete Größe beinhalten.

Schließlich wird zumindest ein dritter Wert E₃ für das Empfangssignal E oder eine aus dem Empfangssignal E abgeleitete Größe entsprechend einem ersten Schaltpunkt P₁ anhand des ersten S₁ und/oder zweiten Schaltzustands S₂ und unter Berücksichtigung des zumindest einen Einfluss-Intervalls ΔE(U) bestimmt. Bevorzugt, und wie im Falle der Fig. 3a, wird der Schaltpunkt P1 derart gewählt, dass er außerhalb des Einfluss-Intervalls ΔE(U) des ersten S₁ und zweiten Schaltzustands S₂ liegt.

Gemäß Fig. 3b wird zusätzlich zum ersten Schaltpunkt P₁ ein zweiter Schaltpunkt P₂ bestimmt. Diesem zweiten Schaltpunkt P₂ entspricht ein vierter Wert E₄ für das Empfangssignal E oder eine daraus abgeleitete Größe. Die beiden Schaltpunkte P₁ und P₂ definieren eine Schaltpunkt-Hysterese mit einem vorgebbaren Schaltabstand ΔP. Der Schaltabstand ΔP ist dabei gegeben durch den Betrag der Differenz zwischen dem dritten E₃ und vierten Wert E₄ für das Empfangssignal E oder die aus dem Empfangssignal E abgeleitete Größe.

Sowohl der erste P₁, als auch der zweite Schaltpunkt P₂ sind derart gewählt, dass sie zwischen den Werten E₁ und E₂ für das Empfangssignal E oder die daraus abgeleitete Größe entsprechend dem ersten S₁ und zweiten Schaltzustand S₂ liegen. Der dritte Wert E₃ für das Empfangssignal E weist also einen ersten Abstand d₁ zu einem Maximalwert E_{1,max} des ersten Wertebereichs ΔE₁ auf, während der vierte Wert E₄ für das Empfangssignal E einen zweiten Abstand d₂ zu einem Minimalwert E_{2,min} des zweiten Wertebereichs Δ_{E2} aufweist, wobei d₁,d₂>0 gilt. Die Abstände d₁ und d₂ können dabei gleich groß oder auch unterschiedlich sein.

Bevorzugt, aber nicht zwingend, wird ferner der Schaltabstand ΔP möglichst groß gewählt, insbesondere größer als das Einfluss-Intervall ΔE(U).

Die in Fig. 3b gezeigte Ausgestaltung beschreibt im Prinzip den Idealfall für eine Ausgestaltung mit zwei Schaltpunkten P₁ und P₂. In manchen Fällen kann es vorkommen, dass die Schaltpunkte P₁ und P₂ nicht so gewählt werden können, dass derSchaltabstand ΔP größer als das Einfluss-Intervall ΔE(U) ist. Ferner kann auch nicht immer gewährleistet werden, dass der dritte Wert E₃ für das Empfangssignal E einen ersten Abstand d₁ zu einem Maximalwert E_{1,max} des ersten Wertebereichs ΔE₁ und der vierte Wert E₄ für das Empfangssignal E einen zweiten Abstand d₂ zu einem Minimalwert E2,min des zweiten Wertebereichs Δ_{E2} aufweist.

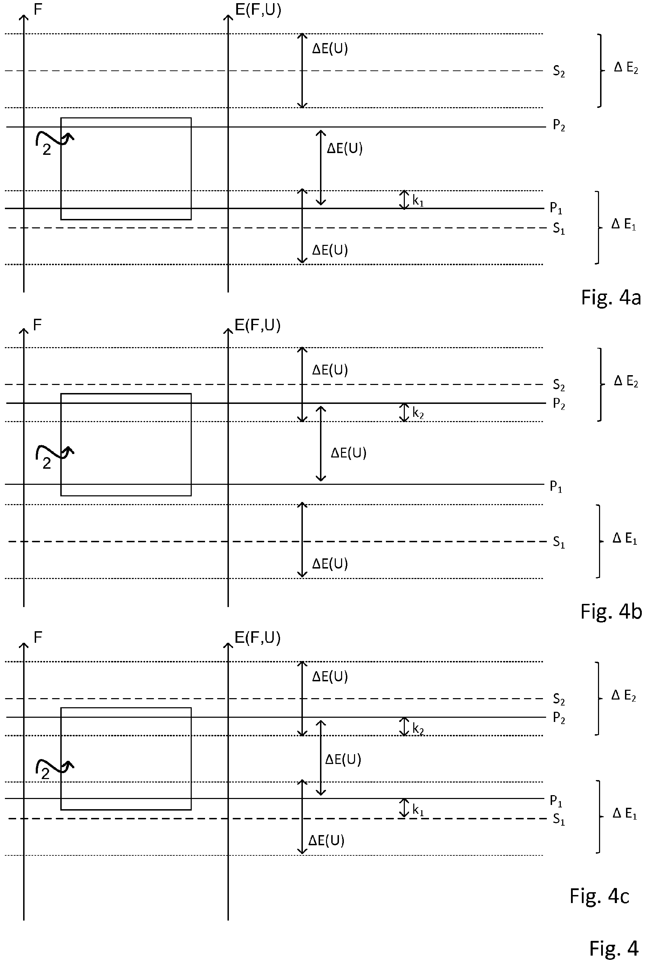

In Fig. 4 sind beispielhaft drei Fälle gezeigt, die auftreten, falls es keine Möglichkeit der Bestimmung sämtlicher Parameter des Feldgeräts 1 gemäß dem beschriebenen Idealfall gibt.

In Fig. 4a ist eine schematische Darstellung eines ersten Falls gezeigt, bei welchem der Abstand d₁ zwischen dem dritten Wert E₃ für das Empfangssignal E und dem Maximalwert E_{1,max} des ersten Wertebereichs ΔE₁<0 ist. In diesem Fall gibt es einen kritischen Bereich k₁, in welchem ein ungewolltes Schalten oder Nicht-Schalten in Folge des Umgebungsparameters U auftreten kann. Ein ähnlicher Fall ist in Fig. 4b dargestellt. Hier ist der Abstand d₂ zwischen dem vierten Wert E₄ für das Empfangssignal E und dem Minimalwert E_{2,min} des zweiten Wertebereichs ΔE₁ <0. Dann gibt es einen kritischen Bereich k₂, in welchem ein ungewolltes Schalten oder Nicht-Schalten in Folge des Umgebungsparameters U auftreten kann. Im schlimmsten Fall, wie in Fig 4c illustriert, sind sowohl d₁ als auch d₂ <0, so dass beide kritischen Bereiche k₁ und k₂ gleichzeitig auftreten.

Erfindungsgemäß wird der Schaltpunkt P₁ oder die Schaltpunkte P₁ und P₂ bevorzugt derart gewählt, dass eine Ausgestaltung wie in Fig. 3b beschrieben zustande kommt. Beispielsweise kann zu diesem Zweck der Schaltabstand ΔP verringert werden, falls einer der Abstände d₁ oder d₂ <0 ist. Es ist von Vorteil, dass mittels der vorliegenden Erfindung ein fehlerfreies Schalten des Messgeräts 1 unabhängig von dem zumindest einen Umgebungsparameter U auf einfache Art und Weise gewährleistet werden kann.

### Bezugszeichenliste

- 1: Feldgerät
- 2: Sensoreinheit
- 3: Schwinggabel, mit 3a Antriebs-/Empfangseinheit
- 4: a Messelektrode, b Guardelektrode, c Masseelektrode
- 5: Gehäuse, 5a Halsrohr, 5b Anschlussstecker
- 6: Elektronikeinheit

- M: Medium
- U: Umgebungsparameter
- F: Füllstand
- E: Empfangssignal
- E₁-E₄: erster-vierter Wert für das Empfangssignal oder die daraus abgeleitete Größe
- E_{1,max}: Maximalwert des ersten Wertebereichs
- E_{2,min}: Minimalwert des zweiten Wertebereichs
- ΔE(U): Einfluss-Intervall
- S₁, S₂: erster, zweiter Schaltpunkt
- ΔE₁, ΔE₂: erster, zweiter Wertebereich
- P₁, P₂: erster, zweiter Schaltpunkt
- d₁, d₂: erster, zweiter Abstand
- k₁, k₂: erster, zweiter kritischer Bereich

## Patentansprüche

1. Verfahren zur Parametrierung einer Vorrichtung (1) zur Bestimmung und/oder Überwachung eines vorgebbaren Füllstands, umfassend zumindest eine Sensoreinheit (2) und eine Elektronik (6),
mit folgenden Verfahrensschritten:
Bestimmen zumindest eines Einfluss-Intervalls (ΔE(U)) für ein von der Sensoreinheit (2) empfangenes Empfangssignal (E) in Abhängigkeit von zumindest einem Umgebungsparameter (U), welches Einfluss-Intervall (ΔE(U)) sich über einen vorgegebenen Wertebereich für den jeweiligen Umgebungsparameter erstreckt und eine Variation des Empfangssignals (E) in Abhängigkeit des Umgebungsparameters (U) beschreibt,
Bestimmen eines ersten Wertes (E₁) für das Empfangssignal (E) oder eine aus dem Empfangssignal (E) abgeleiteten Größe entsprechend einem ersten Schaltzustand (S₁), bei welchem Wert sich die Sensoreinheit (2) in einem ersten Zustand befindet,
Bestimmen eines zweiten Wertes (E₂) für das Empfangssignal (E) oder eine aus dem Empfangssignal (E) abgeleiteten Größe entsprechend einem zweiten Schaltzustand (S₂), bei welchem Wert sich die Sensoreinheit (2) in einem zweiten Zustand befindet, und
Bestimmen zumindest eines dritten Wertes (E₃) für das Empfangssignal (E) oder eine aus dem Empfangssignal (E) abgeleiteten Größe entsprechend einem ersten Schaltpunkt (P₁) anhand des ersten (S₁) und/oder zweiten Schaltzustands (S₂) und unter Berücksichtigung des zumindest einen Einfluss-Intervalls (ΔE(U)),
wobei anhand des zumindest einen Einfluss-Intervalls (ΔE(U)) ein erster Wertebereich (ΔE₁) für das Empfangssignal (E) oder die aus dem Empfangssignal (E) abgeleitete Größe ermittelt wird, welcher erste Wertebereich (ΔE₁) den ersten Wert (E₁) des Empfangssignals (E) oder der aus dem Empfangssignal (E) abgeleiteten Größe enthält,
wobei der erste Wertebereich (ΔE₁) dem ersten Schaltzustand (S₁) entspricht, und
wobei der erste Schaltpunkt (P₁) derart gewählt wird, dass der dritte Wert (E₃) für das Empfangssignal (E) oder die aus dem Empfangssignal (E) abgeleitete Größe außerhalb des ersten Wertebereichs (ΔE₁) entsprechend dem ersten Schaltzustand (S₁) liegt.

2. Verfahren nach Anspruch 1,
wobei es sich bei dem Umgebungsparameter (U) um die Temperatur den Druck, die Feuchte, die Dichte oder die Viskosität handelt.

3. Verfahren nach Anspruch 1 oder 2,
wobei das Einfluss-Intervall (ΔE(U)) jeweils symmetrisch um den ersten (S₁) und zweiten Schaltzustand (S₂) bzw. den ersten (E₁) und zweiten Wert (E₂) für das Empfangssignal (E) oder die daraus abgeleitete Größe herum gelegt wird.

4. Verfahren nach zumindest einem der vorherigen Ansprüche,
wobei zumindest ein vierter Wert (E₄) für das Empfangssignal (E) oder eine aus dem Empfangssignal (E) abgeleitete Größe entsprechend einem zweiten Schaltpunkt (P₂) anhand des ersten (S₁) und/oder zweiten Schaltzustands (S₂) und unter Berücksichtigung des zumindest einen Einfluss-Intervalls (ΔE(U)) bestimmt wird.

5. Verfahren nach Anspruch 4,
wobei der erste (P₁) und/oder zweite Schaltpunkt (P₂) derart bestimmt wird/werden, dass der dritte (E₃) und/oder vierte Wert (E₄) für das Empfangssignal (E) oder die aus dem Empfangssignal (E) abgeleitete Größe zwischen dem ersten (E₁) und zweiten Wert (E₂) für das Empfangssignal (E) oder die aus dem Empfangssignal (E) abgeleitete Größe entsprechend dem ersten (S₁) und zweiten Schaltzustand (S₂) liegt/liegen.

6. Verfahren nach Anspruch 4 oder 5,
wobei der erste (P₁) und zweite Schaltpunkt (P₂) einen vorgebaren Schaltabstand (ΔP) zueinander aufweisen, welcher durch einen Betrag einer Differenz zwischen dem dritten (E₃) und vierten Wert (E₄) für das Empfangssignal (E) oder die aus dem Empfangssignal (E) abgeleitete Größe gegeben ist.

7. Verfahren nach Anspruch 6,
wobei der vorgebbare Schaltabstand (ΔP) unter Berücksichtigung des ersten (S₁) und/oder zweiten Schaltzustands (S₂) und des Einfluss-Intervalls (ΔE(U)) maximiert wird.

8. Verfahren nach Anspruch 6 oder 7,
wobei der vorgebbare Schaltabstand (ΔP) derart gewählt wird, dass der Schaltabstand (ΔP) größer als das Einfluss-Intervall (ΔE(U)) ist.

9. Verfahren nach zumindest einem der vorherigen Ansprüche,
wobei anhand des zumindest einen Einfluss-Intervalls (ΔE(U)) ein zweiter Wertebereich (ΔE₂) für das Empfangssignal (E) oder die aus dem Empfangssignal (E) abgeleitete Größe ermittelt wird, welcher zweite Wertebereich (ΔE₂) den zweiten Wert (E₂) des Empfangssignals (E) oder der aus dem Empfangssignal (E) abgeleiteten Größe enthält, und wobei der zweite Wertebereich (ΔE₂) dem zweiten Schaltzustand (S₂) entspricht.

10. Verfahren nach Anspruch 9,
wobei der zweite Schaltpunkt (P₂) derart gewählt wird, dass der vierte Wert (E₄) für das Empfangssignal (E) oder die aus dem Empfangssignal (E) abgeleitete Größe außerhalb des zweiten Wertebereichs (ΔE₂) entsprechend dem zweiten (S₂) Schaltzustand liegt.

11. Verfahren nach Anspruch 9 oder 10 und 4,
wobei der erste (P₁) und zweite Schaltpunkt (P₂) derart gewählt werden, dass der dritte (E₃) und vierte Wert (E₄) für das Empfangssignal (E) oder die aus dem Empfangssignal (E) abgeleitete Größe außerhalb des (ΔE₁) und/oder zweiten Wertebereichs (ΔE₂) entsprechend dem ersten (S₁) und/oder zweiten (S₂) Schaltzustand liegen.

12. Verfahren nach Anspruch 9 oder 10 und 4,
wobei, insbesondere falls ein Betrag einer Differenz zwischen einem Maximalwert (E_{1,max}) des ersten Wertebereichs (ΔE₁) entsprechend dem ersten Schaltzustand (S₁) und einem Minimalwert (E_{2,min}) des zweiten Wertebereichs (ΔE₂) entsprechend dem zweiten Schaltzustand (S₂) kleiner ist als das Einfluss-Intervall (ΔE(U)), der erste oder zweite Schaltpunkt derart gewählt wird, dass der dritte oder vierte Wert für das Empfangssignal oder die aus dem Empfangssignal abgeleitete Größe außerhalb des (ΔE₁) und/oder zweiten Wertebereichs (ΔE₂) entsprechend dem ersten (S₁) und/oder zweiten (S₂) Schaltzustand liegt.

13. Verfahren nach zumindest einem der vorherigen Ansprüche,
wobei die Sensoreinheit (2) im ersten Schaltzustand (S₁) frei von Medium (M) ist.

14. Verfahren nach zumindest einem der vorherigen Ansprüche,
wobei die Sensoreinheit (2) im zweiten Schaltzustand (S₂) zumindest teilweise mit Medium (M) bedeckt ist.

15. Verfahren nach zumindest einem der vorherigen Ansprüche,
wobei der erste (P₁) und/oder zweite Schaltpunkt (P₂) jeweils einem vorgebbaren Bedeckungsgrad der Sensoreinheit (2) entsprechen.

## Claims

1. Method to parameterize a device (1) for determining and/or monitoring a definable fill level, comprising at least one sensor unit (2) and electronics (6), with the following method steps:
Determination of at least one influence interval (ΔE(U)) for a reception signal (E) received by the sensor unit (2) based on at least one ambient parameter (U), wherein
the influence interval (ΔE(U)) extends over a predefined value range for the respective ambient parameter and describes a variation of the reception signal (E) based on the ambient parameter (U),
Determination of a first value (E₁) for the reception signal (E) or a variable derived from the reception signal (E) corresponding to a first switching state (S₁), for whose value the sensor unit (2) is in a first state, determination of a second value (E₂) for the reception signal (E), or a variable derived from the reception signal (E) corresponding to a second switching state (S₂), for whose value the sensor unit (2) is in a second state, and determination of at least one third value (E₃) for the reception signal (E) or a variable derived from the reception signal (E) corresponding to a first switching point (P₁) based on the first (S₁) and/or second switching state (S₂) and
taking into account the at least one influence interval (ΔE(U)),
wherein based on the at least one influence interval (ΔE(U)) a first value range (ΔE₁) for the reception signal (E) or the variable derived from the reception signal (E) is determined, wherein the first value range (ΔE₁) contains the first value (E₁) of the reception signal (E) or the variable derived from the reception signal (E), wherein the first value range (ΔE₁) corresponds to the first switching state (S₁) and wherein the first switching point (P₁) is selected in such a way that the third value (E₃) for the reception signal (E) or the variable derived from the reception signal (E) is outside the first value range (ΔE₁) corresponding to the first switching state (S₁).

2. Method according to claim 1,
wherein the ambient parameter (U) is the temperature, the pressure, the moisture, the density, or the viscosity.

3. Method according to claim 1 or 2,
wherein the influence interval (ΔE(U)) is positioned symmetrically around the first (S₁) and second switching state (S₂) or the first (E₁) and second value (E₂) for the reception signal (E) or the variable derived from this.

4. Method according to at least one of the preceding claims,
wherein at least one fourth value (E₄) for the reception signal (E) or a variable derived from the reception signal (E) corresponding to a second switching point (P₂) is determined based on the first (S₁) and/or second switching state (S₂) and taking into account the at least one influence interval (ΔE(U)).

5. Method according to claim 4,
wherein the first (P₁) and/or second switching point (P₂) is/are determined in such a way that the third (E₃) and/or fourth value (E₄) for the reception signal (E) or the variable derived from the reception signal (E) is/are between the first (E₁) and second value (E₂) for the reception signal (E) or the variable derived from the reception signal (E) corresponding to the first (S₁) and second switching state (S₂).

6. Method according to claim 4 or 5,
wherein the first (P₁) and second switching point (P₂) exhibit a definable switching distance (ΔP) to one another that represents a difference between the third (E₃) and fourth value (E₄) for the reception signal (E) or the variable derived from the reception signal (E).

7. Method according to claim 6,
wherein the definable switching distance (ΔP) is maximized, taking into account the first (S₁) and/or second switching state (S₂) and also the influence interval (ΔE(U)).

8. Method according to claim 6 or 7,
wherein the definable switching distance (ΔP) is selected in such a way that the switching distance (ΔP) is greater than the influence interval (ΔE(U)).

9. Method according to at least one of the preceding claims,
wherein based on the at least one influence interval (ΔE(U)) a second value range (ΔE₂) for the reception signal (E) or the variable derived from the reception signal (E) is determined, wherein the second value range (ΔE₂) contains the second value (E₂) of the reception signal (E) or the variable derived from the reception signal (E) and wherein the second value range (ΔE₂) corresponds to the second switching state (S2).

10. Method according to claim 9,
wherein the second switching point (P₂) is selected in such a way that the fourth value (E₄) for the reception signal (E) or the variable derived from the reception signal (E) is outside the second value range (ΔE₂) corresponding to the second (S₂) switching state.

11. Method according to claim 9 or 10 and 4,
wherein the first (P₁) and second switching point (P₂) are selected in such a way that the third (E₃) and fourth value (E₄) for the reception signal (E) or the variable derived from the reception signal (E) are outside the first (E₁) and/or second value range (E₂) corresponding to the first (S₁) and/or second (S₂) switching state.

12. Method according to claim 9 or 10 and 4,
wherein, in particular if a difference between a maximum value (E_{1,max}) of the first value range (E₁) corresponding to the first switching state (S₁) and a minimum value (E_{2,min}) of the second value range (E₂) corresponding to the second switching state (S₂) is less than the influence interval (ΔE(U)), the first or second switching point is selected in such a way that the third or fourth value for the reception signal or the variable derived from the reception signal is outside the first (E₁) and/or second value range (E₂) corresponding to the first (S₁) and/or second (S₂) switching state.

13. Method according to at least one of the preceding claims,
wherein the sensor unit (2) is free of medium (M) in the first switching state (S₁).

14. Method according to at least one of the preceding claims,
wherein the sensor unit (2) is at least partially covered with medium (M) in the second switching state (S₂).

15. Method according to at least one of the preceding claims,
wherein the first (P₁) and/or second switching point (P₂) each correspond to a definable degree of coverage of the sensor unit (2).

## Revendications

1. Procédé destiné au paramétrage d'un dispositif (1) destiné à la détermination et/ou à la surveillance d'un niveau pouvant être prédéfini, lequel dispositif comprend au moins une unité de capteur (2) et une électronique (6), lequel procédé comprend les étapes suivantes :
- Détermination d'au moins un intervalle d'influence (ΔE(U)) pour un signal de réception (E) reçu par l'unité de capteur (2) en fonction d'au moins un paramètre d'environnement (U), lequel intervalle d'influence (ΔE(U)) s'étend sur une gamme de valeurs prédéfinie pour le paramètre d'environnement respectif et décrit une variation du signal de réception en fonction du paramètre d'environnement (U),
- Détermination d'une première valeur (E₁) pour le signal de réception (E) ou une grandeur dérivée du signal de réception (E) correspondant à un premier état de commutation (S₁), valeur pour laquelle l'unité de capteur (2) se trouve dans un premier état,
- Détermination d'une deuxième valeur (E₂) pour le signal de réception (E) ou une grandeur dérivée du signal de réception (E) correspondant à un deuxième état de commutation (S₂), valeur pour laquelle l'unité de capteur (2) se trouve dans un deuxième état, et
- Détermination au moins d'une troisième valeur (E₃) pour le signal de réception (E) ou une grandeur dérivée du signal de réception (E) correspondant à un premier point de commutation (P₁) à l'aide du premier état de commutation (S₁) et/ou du deuxième état de commutation (S₂) et en tenant compte de l'au moins un intervalle d'influence (ΔE(U)),
une première gamme de valeurs (ΔE₁) pour le signal de réception (E) ou la grandeur dérivée du signal de réception (E) étant déterminée à l'aide de l'au moins un intervalle d'influence (ΔE(U)), laquelle première gamme de valeurs (ΔE₁) contient la première valeur (E₁) du signal de réception (E) ou de la grandeur dérivée du signal de réception (E), la première gamme de valeurs (ΔE₁) correspondant au premier état de commutation (S₁), et le premier point de commutation (P₁) étant choisi de telle sorte que la troisième valeur (E₃) pour le signal de réception (E) ou la grandeur dérivée du signal de réception (E) se situe à l'extérieur de la première gamme de valeurs (ΔE₁) correspondant au premier état de commutation (S₁).

2. Procédé selon la revendication 1,
pour lequel le paramètre d'environnement (U) est la température, la pression, l'humidité, la densité ou la viscosité.

3. Procédé selon la revendication 1 ou 2,
pour lequel l'intervalle d'influence (ΔE(U)) est défini respectivement de manière symétrique autour du premier état de commutation (S₁) et du deuxième état de commutation (S₂) ou de la première valeur (E₁) et de la deuxième valeur (E₂) pour le signal de réception (E) ou la grandeur qui en est dérivée.

4. Procédé selon au moins l'une des revendications précédentes,
pour lequel au moins une quatrième valeur (E₄) pour le signal de réception (E) ou une grandeur dérivée du signal de réception (E) correspondant à un deuxième point de commutation (P₂) est déterminée à l'aide du premier état de commutation (S₁) et/ou du deuxième état de commutation (S₂) et en tenant compte de l'au moins un intervalle d'influence (ΔE(U)).

5. Procédé selon la revendication 4,
pour lequel le premier point de commutation (P₁) et/ou le deuxième point de commutation (P₂) est/sont déterminé(s) de telle sorte que la troisième valeur (E₃) et/ou la quatrième valeur (E₄) pour le signal de réception (E) ou la grandeur dérivée du signal de réception (E) se situe(nt) entre la première valeur (E₁) et la deuxième valeur (E₂) pour le signal de réception (E) ou la grandeur dérivée du signal de réception (E) correspondant au premier état de commutation (S₁) et au deuxième état de commutation (S₂).

6. Procédé selon la revendication 4 ou 5,
pour lequel le premier point de commutation (P₁) et le deuxième point de commutation (P₂) présentent une distance de commutation (ΔP) l'un par rapport à l'autre, laquelle distance peut être prédéfinie et est donnée par une valeur d'une différence entre la troisième valeur (E₃) et la quatrième valeur (E₄) pour le signal de réception (E) ou la grandeur dérivée du signal de réception (E).

7. Procédé selon la revendication 6,
pour lequel la distance de commutation (ΔP) pouvant être prédéfinie est maximisée en tenant compte du premier état de commutation (S₁) et/ou du deuxième état de commutation (S₂) et de l'intervalle d'influence (ΔE(U)).

8. Procédé selon la revendication 6 ou 7,
pour lequel la distance de commutation (ΔP) pouvant être prédéfinie est choisie de telle sorte que la distance de commutation (ΔP) est supérieure à l'intervalle d'influence (ΔE(U)).

9. Procédé selon au moins l'une des revendications précédentes,
pour lequel on détermine à l'aide de l'au moins un intervalle d'influence (ΔE(U)) une deuxième gamme de valeurs (ΔE₂) pour le signal de réception (E) ou la grandeur dérivée du signal de réception (E), laquelle deuxième gamme de valeurs (ΔE₂) contient la deuxième valeur (E₂) du signal de réception (E) ou de la grandeur dérivée du signal de réception (E), la deuxième gamme de valeurs (ΔE₂) correspondant au deuxième état de commutation (S₂).

10. Procédé selon la revendication 9,
pour lequel le deuxième point de commutation (P₂) est choisi de telle sorte que la quatrième valeur (E₄) pour le signal de réception (E) ou la grandeur dérivée du signal de réception (E) se situe en dehors de la deuxième gamme de valeurs (ΔE₂) correspondant au deuxième état de commutation (S₂).

11. Procédé selon la revendication 9 ou 10 et 4,
pour lequel le premier point de commutation (P₁) et le deuxième point de commutation (P₂) sont choisis de telle sorte que la troisième valeur (E₃) et la quatrième valeur (E₄) pour le signal de réception (E) ou la grandeur dérivée du signal de réception (E) se trouvent en dehors de la première gamme de valeurs (ΔE₁) et/ou de la deuxième gamme de valeurs (ΔE₂) correspondant au premier état de commutation (S₁) et/ou au deuxième état de commutation (S₂).

12. Procédé selon la revendication 9 ou 10 et 4,
pour lequel, notamment si une valeur absolue d'une différence entre une valeur maximale (E_{1,max}) de la première gamme de valeurs (ΔE₁) correspondant au premier état de commutation (S₁) et une valeur minimale (E_{2,min}) de la deuxième gamme de valeurs (ΔE₂) correspondant au deuxième état de commutation (S₂) est inférieure à l'intervalle d'influence (ΔE(U)), le premier ou le deuxième point de commutation est choisi de telle sorte que la troisième ou la quatrième valeur pour le signal de réception ou la grandeur dérivée du signal de réception se situe en dehors de la première gamme de valeurs (ΔE₁) et/ou de la deuxième gamme de valeurs (ΔE₂) correspondant respectivement au premier état de commutation (S₁) et/ou au deuxième état de commutation (S₂).

13. Procédé selon au moins l'une des revendications précédentes,
pour lequel l'unité de capteur (2) n'est pas recouverte de produit (M) dans le premier état de commutation (S₁).

14. Procédé selon au moins l'une des revendications précédentes,
pour lequel l'unité de capteur (2) est au moins partiellement recouverte de produit (M) dans le deuxième état de commutation (S₂).

15. Procédé selon au moins l'une des revendications précédentes,
pour lequel le premier point de commutation (P₁) et/ou le deuxième point de commutation (P₂) correspondent chacun à un degré de recouvrement, pouvant être prédéfini, de l'unité de capteur (2).
